# EUROPEAN PATENT SPECIFICATION

(11) **EP 1 747 982 B1**
(45) Date of publication and mention of the grant of the patent: **27.03.2013**
(21) Application number: 06015505.8
(22) Date of filing: 25.07.2006
(51) Int. Cl.: B62K 11/10, B62H 1/02

(54) **Two-wheeled vehicle**
Zweiradfahrzeug
Véhicule à deux roues

(30) Priority: 25.07.2005 JP 2005214876; 16.06.2006 JP 2006167947
(43) Date of publication of application: 31.01.2007
(73) Proprietor: Yamaha Hatsudoki Kabushiki Kaisha, Shizuoka-ken Shizuoka 438-8501 (JP)
(72) Inventor: Yamamoto, Yoshiaki Yamaha Hatsudoki Kabushiki Kaisha, Iwata-shi Shizuoka-ken 438-8501 (JP)
(74) Representative: Grünecker, Kinkeldey, Stockmair & Schwanhäusser

(56) References cited:
- EP-A- 0 581 310
- WO-A-2004/071858
- FR-A- 2 722 756
- JP-A- 2004 217 147

## Description

The present invention relates to a two-wheeled vehicle, in particular a motorcycle, including a body frame and a unit swinging type motor unit mounted on the body frame for up and down swinging movement. Such a two-wheeled vehicle according to the preamble of claim 1 is known from FR 2 722 756 A1.

In scooter type motorcycles, for example, a structure has been adopted in which a unit swinging type engine unit which is an engine body integrated with a transmission case having a continuously variable transmission mechanism housed therein, is mounted on a body frame for up and down swinging movement

In cases where such an engine unit is supported by the body frame for swinging movement, since the engine unit itself cannot be used as a rigid member as in the case of a rigid type where the engine is fixed to the body frame, it is necessary that the rigidity of the body frame itself is enhanced to thereby enhance the supporting rigidity of the engine. Therefore, a large-sized suspension bracket is disposed or a reinforcement member is added, for example, to enhance the rigidity of the foregoing body frame (for example, see JP-A-2004-276643).

However, In cases where a structure is adopted in which a large-sized bracket or a reinforcement member is disposed to enhance the rigidity of the body frame, the number of parts is increased, as well as the body weight.

In view of the foregoing, an object of this invention is to provide a two-wheeled vehicle, in particular a motorcycle, capable of enhancing the supporting rigidity of a body frame to a motor unit without need of increasing the number of parts and body weight.

This objective is solved in an inventive manner by a two-wheeled vehicle according to claim 1. A motorcycle, comprising a body frame having a pair of left and right, first and second frame members disposed on opposite sides of the vehicle, and a motor unit mounted on the body frame for up and down swinging movement, wherein the motor unit is one in which a motor body and a transmission case having a power transmission mechanism housed therein are joined together integrally, wherein a pivot section supported by the body frame is formed in a region of the motor body or the transmission case below a motor output shaft, and wherein the body frame is provided with first and second cross members disposed with the pivot section held therebetween, when viewed from the side of the vehicle, for connecting the first and second frame members.

Preferably, the first and second cross members and the pivot section are arranged approximately in a straight line when viewed from the side of the vehicle, including a case where the pivot section is located on a straight line connecting the first and second cross members and a case where the pivot section is offset a little from the straight line to such an extent that an angle made by the first and second cross members and the pivot section is no smaller than 120°.

Further, the motor unit is an engine unit, in which an engine body and a transmission case are joined together integrally, and wherein the motor output shaft is a crankshaft.

Still further, the engine body has at least one cylinder disposed in a forward leaning state, and the first and second cross members are disposed above and below the at least one cylinder, respectively.

Yet further, the body frame is provided with a pair of left and right, first and second vertical frame members extending, each approximately in a straight line, between a connection point of the first frame member with the first cross member and a connection point of the first frame member with the second cross member and between a connection point of the second frame member with the first cross member and a connection point of the second frame member with the second cross member, respectively, and the at least one cylinder crosses the first and second vertical frame members when viewed from the side of the vehicle.

According to another embodiment, the first and second frame members include a pair of left and right, first and second down tubes having first and second lower oblique side sections extending downward from a head pipe and first and second lower horizontal side sections adjoinina the lower oblique side sections and extending approximately horizontally toward the rear, and a pair of left and right, first and second seat rails having first and second upper oblique side sections extending obliquely upward toward the rear from the halfway parts of the first and second lower horizontal side sections of the first and second down tubes and first and second upper horizontal side sections adjoining the first and second upper oblique side sections and extending rearward, the halfway parts of the first and second upper oblique side sections and the rear ends of the first and second lower horizontal side sections being connected by first and second vertical frame members, respectively, and the first and second cross members being disposed near connecting portions of the vertical frame members with the upper oblique side sections and the lower horizontal side sections, and the at least one cylinder crosses the vertical frame members when viewed from the side of the vehicle.

Preferably, the pivot section is supported on the vertical frame member.

Further, preferably the lower ends of the vertical frame members and the rear ends of the lower horizontal side sections are joined through suspension members and the pivot section is supported on the suspension members through elastic bushes.

Yet further, preferably the pivot section is disposed on the cylinder side of an imaginary plane including the crank axis and perpendicular to the cylinder axis and below the bottom of the cylinder when viewed in the direction of the crankshaft. Therein, the distance between the pivot section and the second cross member may be set shorter than that between the pivot section and the first cross member. Further, therein the second cross member may be disposed below and near the pivot section. Yet further, the second cross member may be disposed forward of and near the pivot section.

Still further, preferably a third cross member is connected to connecting portions of the first and second lower horizontal side sections with the upper oblique side sections, a high-rigidity section in the shape of approximately a triangular pillar is formed by the first and second lower horizontal side sections, first and second upper oblique side sections and first and second vertical frame members, and the first, second and third cross members, and the pivot section is located in the high-rigidity section. Therein, the second cross member may be made up of vertical side sections extending downward from the first and second lower horizontal side sections and a horizontal side section for connecting both the vertical side sections to each other, and a main stand may be supported on the horizontal side section.

Preferably, the other end of a rear cushion coupled at one end to the engine unit is coupled near the connecting portion of the first cross member with the vertical frame member.

According to yet another embodiment, the power transmission mechanism is provided with a continuously variable transmission mechanism having a driving sheave disposed coaxially with the crankshaft, a driven sheave disposed on the rear wheel side and a V-belt stretched over both the sheaves, and the at least one cylinder in the engine body is disposed such that the angle made by the extension of a straight line connecting rotation centers of the driven sheave and driving sheave and the cylinder axis is no larger than 45°.

Preferably, the cylinder is disposed offset such that the extension of the cylinder axis passes through a position offset downward from the crank axis.

In the following, the present invention is explained in greater detail with respect to several embodiments thereof in conjunction with the accompanying drawings, wherein:
- FIG. 1: is a side view of a body frame of a motorcycle on which an engine unit according to a first embodiment is mounted,
- FIG. 2: is a plan view of the body frame,
- FIG. 3: is a perspective view of the body frame,
- FIG. 4: is a side view of the engine unit suspension section of the body frame,
- FIG. 5: is a sectional view of an elastic bush for supporting the engine unit,
- FIG. 6: is a side view of the engine unit,
- FIG. 7: is a plan view partly in section of the engine unit,
- FIG. 8: is a side view of a motorcycle according to a second embodiment,
- FIG. 9: is a side view of a body frame of the motorcycle,
- FIG. 10: is a plan view of the body frame,
- FIG. 11: is a rear view of the body frame,
- FIG. 12: is a side view of the high-rigidity section of the body frame,
- FIG. 13: is a cross-sectional view of the engine unit supporting section of the body frame (sectional view along the line XIII-XIII in FIG. 12), and
- FIG. 14: illustrate an elastic bush of the engine unit.

### Description of Reference Numerals and Symbols:

1,101: body frame
1a,101a: first and second frame members
2: head pipe
7: engine unit
9: engine body
10: continuously variable transmission mechanism
11: transmission case
12: crankshaft
13b: pivot section
15: cylinder block
16: cylinder head
20: driving sheave
21: driven sheave
22: V-belt
40: first and second down tubes
40a: lower oblique side section
40b: lower horizontal side section
41: first and second seat rails
41a: upper oblique side section
41b: upper horizontal side section
49,73: vertical frame member
51: suspension member
53,75: first cross member
54,73: second cross member
54a: vertical side section
54b: horizontal side section
55: third cross member
56: high-rigidity section
58: rear cushion
60: main stand
62,83: elastic bush
A: straight line connecting rotation centers
B: cylinder axis (axis of cylinder)
C: imaginary plane
P: crank axis

Now, an embodiment will be described below with reference to the accompanying drawings.

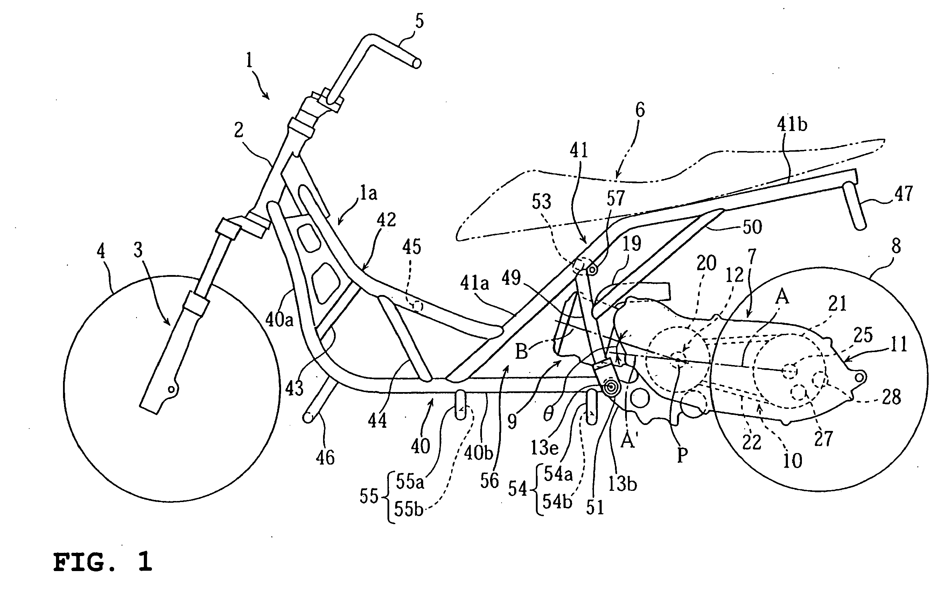

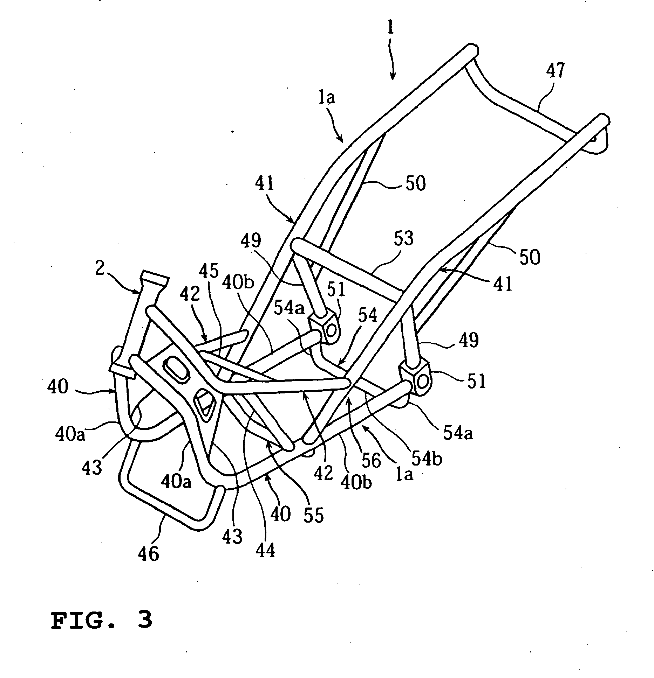

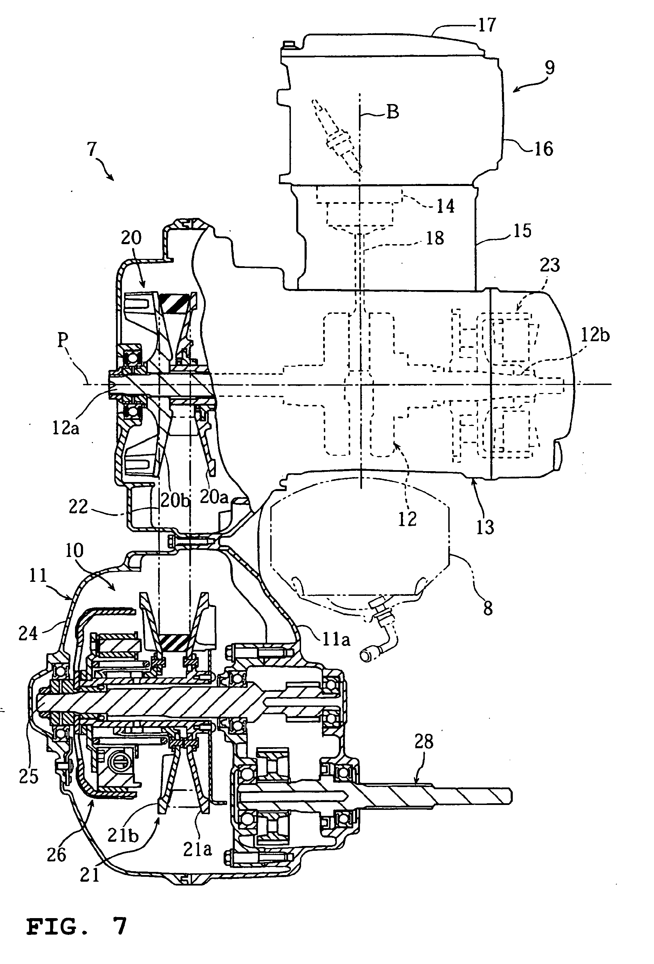

FIG. 1 through FIG. 7 are views illustrating a motorcycle according to a first embodiment. "Front and rear" or "left and right" referred to in this embodiment means the front and rear or the left and right when viewed by a rider sitting on the seat.

In the figures, numeral 1 denotes a body frame of a scooter type motorcycle. The body frame 1 has a head pipe 2 disposed at the forward end of the body, leaning rearwardly at a given angle, and a pair of left and right first and second frame members 1a, 1a extending rearwardly from the head pipe 2.

A front fork 3 is pivotally mounted to the head pipe 2 for the leftward and rightward steering. At the lower end of the front fork 3 is supported a front wheel 4 and at the top thereof is fixed a steering handlebar 5.

On the first and second frame members 1a, 1a is mounted a straddle type seat 6 for two riders, and a unit swinging engine unit (motor unit) 7 for up and down swinging movement below the seat 6 is mounted. A rear wheel 8 is supported at the rear end of the engine unit 7.

The body frame 1, although not shown in the figure, is covered at the front side of the head pipe 2 with a front cover, at the rear side of the head pipe 2 with a leg shield and around a region downward of the seat 6 with a side cover.

The engine unit 7 is an engine body (motor body) 9 integrated with a transmission case 11 having a continuously variable transmission mechanism (power transmission mechanism) 10 housed therein.

The engine body 9 is a water-cooled, four-stroke single-cylinder engine, and is configured such that a cylinder block 15 having a piston 14 housed therein for sliding movement and a cylinder head 16 are joined to the crank case 13 having a crankshaft (motor output shaft) 12 housed therein, at the front mating face, and a head cover 17 is mounted on the cylinder head 16. The crankshaft 12 is disposed with crank axis P directed horizontally in the lateral direction of the vehicle, and is coupled to the piston 14 through a connecting rod 18.

An intake pipe 19 in communication with an intake port is connected to an upper wall 16a of the cylinder head 16. The intake pipe 19 extends being bent rearwardly from the cylinder head 16, to the downstream end of the intake pipe 19 is mounted a fuel injection valve 19a, on the upstream side is mounted a throttle body 19b having a throttle valve, and to the upstream end is connected an air cleaner (not shown).

In the lower wall 16b of the cylinder head 16 is formed an external connection port of the exhaust port and to the connection port is connected an exhaust pipe (not shown). The exhaust pipe is connected to a muffler (not shown) disposed on the opposite side from the transmission case 11 with respect to the rear wheel 8.

The continuously variable transmission mechanism 10 includes a driving sheave 20 disposed at the left end 12a of the crankshaft 12 sticking out into the transmission case 11, coaxially with the crankshaft, a driven sheave 21 disposed in the rear end portion of the transmission case 11, and a V-belt 22, made of rubber or plastic, stretched over the driven and driving sheaves 20, 21. At the right side end 12b of the crankshaft 12 is disposed a generator 23.

The transmission case 11 comprises a case body 11a adjoining the crank case 13 and extending to the region near the rear wheel 8, and a case cover 24 mounted detachably on the left side mounting face of the case body 11a.

The driving sheave 20 includes a moving sheave 20a mounted to the crankshaft 12 such that it is movable in the axial direction and rotated with the crankshaft 12, and a fixed sheave 20b fixed to the crankshaft 12 such that it is immovable in the axial direction and rotated with the crankshaft 12.

The driven sheave 21 includes a driven shaft 25 supported by the transmission case 11 at the rear end, a fixed sheave 21a mounted to the driven shaft 25 such that it is rotatable and is immovable in the axial direction, a moving sheave 21b mounted such that it is rotatable with the fixed sheave 21a and movable in the axial direction, and a centrifugal clutch 26 disposed between the fixed sheave 21a and the driven shaft 25.

Engine power is transmitted from the crankshaft 12 to the driven sheave 21 through the driving sheave 20 and V-belt 22, and from the driven sheave 21 to the driven shaft 25 through the centrifugal clutch 26. Rotation of the driven shaft 25 is transmitted to the rear wheel 8 mounted on the drive shaft 28, through a main shaft 27 disposed parallel to the driven shaft 25 and a drive shaft 28.

The engine body 9 is disposed approximately horizontally such that the angle θ made by extension A' of the straight line A connecting the rotation center of the driven sheave 21 and that of the driving sheave 20 and the cylinder axis B is no larger than 45° and is approximately 10° in this embodiment.

The cylinder block 15, cylinder head 16 and head cover 17 are disposed offset, when viewed in the direction of the crankshaft, such that the extension B' of the cylinder axis B passes a position offset downward by t (about 5-7 mm) from the crank axis P.

The bottom of the crank case 13 is formed with an oil storage section 13a for storing lubricating oil supplied to regions to be lubricated such as bearings and sliding portions. The oil storage section 13a is formed bulging such that its bottom surface is positioned below the lower surface of the transmission case 11.

The front wall of the oil storage section 13a is formed with a pair of left and right pivot sections 13b, 13b projecting forvvardly. The left and right pivot sections 13b are disposed, when viewed in the direction of the crankshaft, on the cylinder block 15 side of an imaginary plane C including the crank axis P and perpendicular to the cylinder axis B, and below the lower surface 15a of the cylinder block 15.

The first and second frame members 1a, 1a include a pair of left and right first and second down tubes 40, 40 connected to the head pipe 2, and a pair of left and right first and second seat rails 41, 41 connected to the first and second down tubes 40.

The first and second down tubes 40, 40 have first and second lower oblique side sections 40a, 40a connected to the lower end of the head pipe 2 and extending obliquely downward toward the rear while spreading laterally outwardly, and first and second lower horizontal side sections 40b, 40b extending rearwardly and approximately horizontally from the lower ends of the lower oblique side sections 40a.

The first and second seat rails 41, 41 have first and second upper oblique side sections 41a, 41a extending obliquely upward toward the rear from the longitudinally halfway parts of the first and second lower horizontal side sections 40b of the first and second down tubes 40, and first and second upper horizontal side sections 41b, 41b extending a little obliquely upward from the upper ends of the first and second upper oblique side sections 41a. The seat 6 is disposed on the left and right first and second upper horizontal side sections 41b, 41b.

To the upper end of the head pipe 2 is connected the forward ends of left and right first and second upper tubes 42, 42 extending obliquely downward toward the rear approximately along the down tubes 40. The rear ends of the first and second upper tubes 42, 42 are connected to the lower parts of the upper oblique side sections 41a of the first and second seat rails 41.

The first and second lower oblique side sections 40a, 40a of the first and second down tubes 40 and the forward parts of the first and second upper tubes 42 are joined together by gussets 43, 43.

In addition, regions of the first and second lower horizontal side sections 40b, 40b of the first and second down tubes 40 ahead of the connecting portions thereof with the seat rails 41 and regions of the first and second upper tubes 42 behind the gussets 43 are connected by coupling pipes 44, 44 inclined upward toward the front.

Further, regions of the first and second upper tubes 42, 42 behind the connecting portions thereof with coupling pipes 44 are connected to each other by an upper cross pipe 45.

The lower ends of the lower oblique side sections 40a of the first and second down tubes 40 are connected to each other by a front cross pipe 46 projecting obliquely downward toward the front in the shape of approximately a letter C opening upward. A radiator (not shown) and the like are attached to the front cross pipe 46.

The rear ends of the upper horizontal side sections 41b of the first and second seat rails 41 are connected to each other by a rear cross pipe 47 projecting downward in the shape of approximately a letter C opening upward. A seat lock, a tail light unit (not shown) and the like are attached to the rear cross pipe 47.

Between the upper parts of the first and second upper oblique side sections 41a, 41a of the first and second seat rails 41 and the rear ends of the first and second lower horizontal side sections 40b, 40b of the first and second down tubes 41 are disposed a pair of left and right, first and second vertical frame members 49, 49 extending in the vertical direction.

The upper ends of the left and right vertical frame members 49 are connected to the upper oblique side sections 41a. The lower ends of the left and right vertical frame members 49 and the rear ends of the lower horizontal side sections 40b are joined together through suspension members 51, 51.

The vertically halfway parts of the left and right vertical frame members 49 and the longitudinally halfway parts of the upper horizontal side sections 41b are connected by a pair of left and right seat stays 50, 50 extending obliquely upward.

The connecting portions of the first and second seat rails 41, 41 with the first and second vertical frame members 49, 49 are connected to each other by a first cross member 53 extending in the lateral direction. The left and right vertical frame members 49 and first cross member 53 may be formed integrally.

The rear ends of the first and second lower horizontal side sections 40b, 40b of the first and second down tubes 40 are connected to each other by a second cross member 54 extending in the lateral direction. The connecting portions of the first and second lower horizontal side sections 40b, 40b with the first and second upper oblique side sections 41a, 41a are connected to each other by a third cross member 55 extending in the lateral direction.

The second and third cross members 54, 55 are each in the shape of approximately a letter C opening upward, having left and right vertical side sections 54a, 54a, 55a, 55a extending downward from the first and second horizontal side sections 40b, and horizontal side sections 54b, 55b for connecting the left and right vertical side sections 54a, 55a to each other. The second cross member 54 is formed such that it is located below the lower surface of the third cross member 55.

A high-rigidity section 56 in the shape of approximately a triangular pillar is formed by the rearward halves of the first and second lower horizontal side sections 40b, first and second upper oblique side sections 41a and left and right vertical frame members 49, and first, second and third cross members 53, 54, 55.

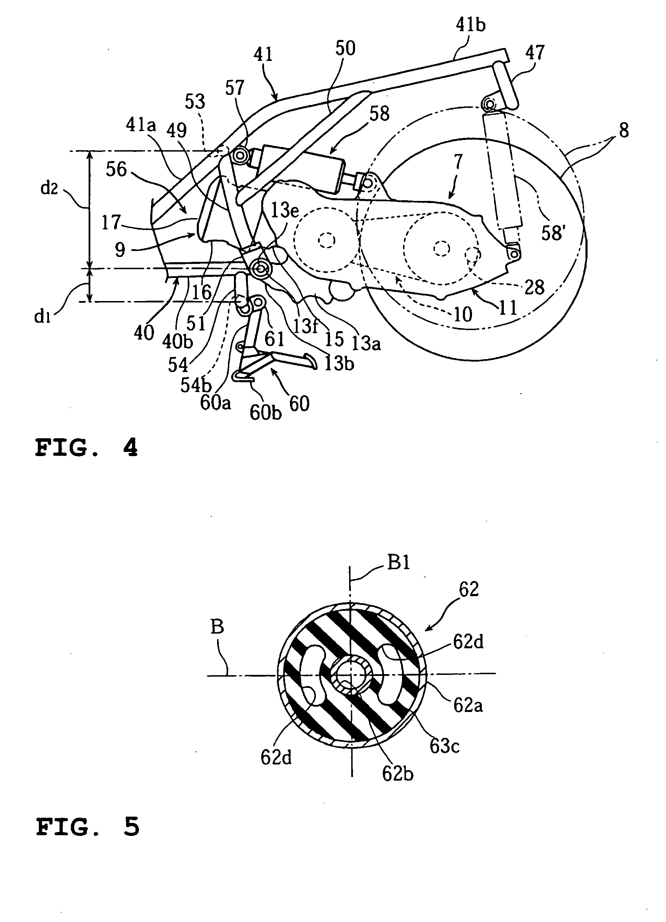

A bracket 57 is connected to the right side end of the first cross member 53. The forward end of a rear cushion 58 is coupled to the bracket 57, as shown in FIG. 4, and the rear end of the rear cushion 58 is coupled to the upper wall of the engine unit 7. The rear cushion 58 is disposed horizontally such that the axis of the rear cushion 58 is approximately parallel to the cylinder axis B in the so-called 1G condition in which only the body weight is exerted on the cushion. Here, as shown in FIG. 4 by a double dot and dash line, a rear cushion 58' may be disposed vertically between the rear end of the transmission case 11 and the rear cross pipe 47.

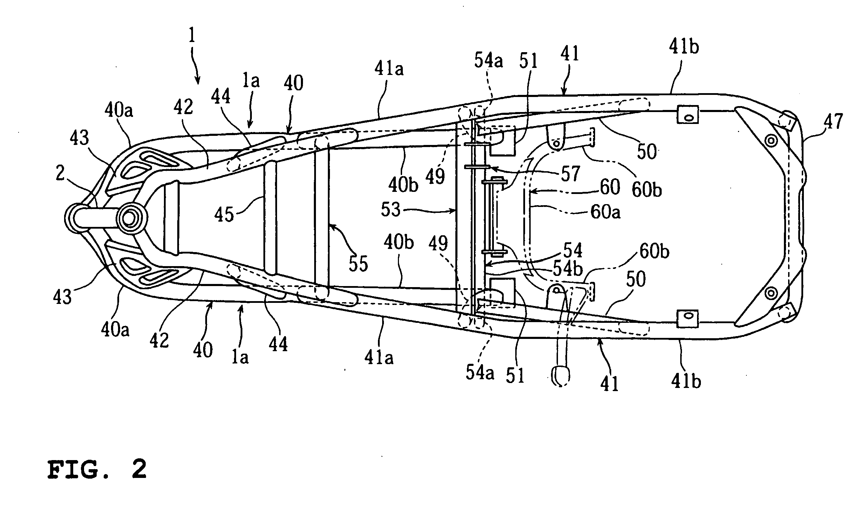

The second cross member 54 is provided with a main stand 60, as shown in FIG. 2 and FIG. 4. The main stand 60 is supported so as to be swingable between a standing position at which the body is supported and a position at which it is in abutment against the bottom of the engine body 9.

The main stand 60 is configured such that a stand body 60a is formed integrally with left and right legs 60b, 60b. The stand body 60a is supported on a stand bracket 61 fixed to the horizontal side section 54b of the second cross member 54, and is biased by an unillustrated spring toward storage.

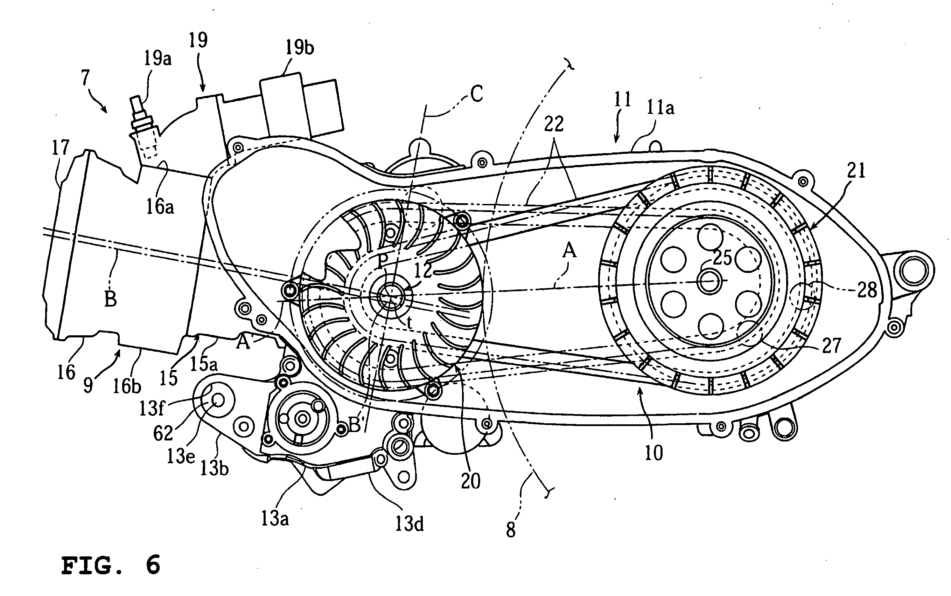

In addition, the stand body 60a is fitted with a shock absorbing member (not shown) to be in abutment against a stopper face 13d formed on the bottom of the oil storage section 13a. The stopper face 13d is formed thick so as to project downward from the bottom of the oil storage section 13a, as shown in FIG. 6, and is inclined upward toward the rear to control fluctuations in the road clearance of the main stand 60 due to fluctuations in the up and down stroke of the rear wheel 8.

The engine unit 7 is supported, at its left and right pivot sections 13b, by the suspension members 51 for up and down swinging movement through a pivot shaft 13e and elastic bushes 62.

The elastic bush 62 is configured, as shown in FIG. 5, such that a rubber member 63c is placed and bonded between an outer pipe 62a and an inner pipe 62b, and inserted between a pivot hole 13f of the pivot section 13b and the pivot shaft 13e. The rubber member 63c has vacant holes 62d, 62d to produce soft spring properties in the direction of the cylinder axis B, and assumes hard spring properties in the direction of B1 perpendicular to the cylinder axis B.

The engine unit 7 is mounted on the frame such that part of the engine body 9 is located in the high-rigidity section 56 surrounded by the left and right vertical frame members 49 and first and second cross members 53, 54.

Specifically, approximately a front half of the cylinder head 16 of the engine body 9, and the head cover 17, are mounted on the body such that they are located in the foregoing high-rigidity section 56, and the first and second cross members 53, 54 are disposed above and below the cylinder head 16 with the cylinder axis (axis of the cylinder) B held therebetween, respectively. Further, the left and right vertical frame members 49 are disposed to the left of and to the right of the cylinder head 16 with the cylinder axis B held therebetween, respectively. When viewed from the side of the vehicle, the cylinder head 16 is disposed such that its cylinder axis B crosses the vertical frame 49.

The distance d1 between the center of the pivot section 13b and that of the horizontal side section 54b of the second cross member 54 is set shorter than the distance d2 between the center of the pivot section 13b and that of the first cross member 53. Further, the second cross member 54 is disposed forward and below of and near the pivot section 13b.

According to the motorcycle of this embodiment, the upper oblique side sections 41a of the first and second seat rails 41 and the lower horizontal side sections 40b of the first and second down tubes 40 are connected by the left and right vertical frame members 49, and the connecting portions of the frame members 49 with the upper oblique side sections 41a and lower horizontal side sections 40b are connected to each other by the first and second cross members 53, 54, so that the rigidity of the body frame itself can be improved.

In addition, the first and second cross members 53, 54 are disposed with the cylinder axis B held therebetween, above and below the engine body 9 disposed leaning forwardly such that the cylinder axis B is approximately in a horizontal direction, respectively, so that the engine body 9 is surrounded by the first and second cross members 53, 54 and first and second frame members 1a, 1a, and the supporting rigidity of the engine by the body frame 1 can be enhanced.

In this embodiment, the cross members 53, 54 for connecting the first and second frame members 1a to each other are disposed with the cylinder axis B held therebetween vertically, so that the foregoing function and effect can be realized and no problem is raised of the number of part and body weight being increased.

Further, the first and second cross members 53, 54 are disposed above and below the cylinder head 16, respectively, and the pivot shaft 13e of the engine unit 7 is located near the second cross member 54, so that interference of the first cross member 53 with the intake pipe 19 or the like when the engine unit 7 makes up and down swinging movements, can be avoided while securing the supporting rigidity.

In this embodiment, the upper parts of the upper oblique side sections 41a of the first and second seat rails 41 and the rear ends of the lower horizontal side sections 40b of the first and second down tubes 40 are connected by the left and right vertical frame members 49, 49, the first and second cross members 53, 54 are disposed near the upper and lower connecting portions of the left and right vertical members 49 and the cylinder head 16 is disposed such that the cylinder axis B crosses the vertical frame members 49, so that the engine body 9 is surrounded by the left and right vertical frame members 49 and first and second cross members 53, 54, and the supporting rigidity of the engine by the body frame 1 can be enhanced also in this respect.

In this embodiment, the rear ends of the lower horizontal side sections 40b of the first and second down tubes 40 and the lower ends of the left and right vertical frame members 49 are joined together through the suspension members 51 and the pivot sections 13b of the engine unit 7 is supported by the suspension members 51, so that the engine unit 7 is directly supported by the body frame 1 and a feeling of directness during acceleration and deceleration and the supporting rigidity of the engine unit can be enhanced compared with when the engine unit is supported, for example, through a link mechanism.

That is, if the engine unit is suspended through a link mechanism, provision of the link causes an increase in the degree of freedom conceming the behavior of the body and a problem is raised of lacking a feeling of directness during acceleration and deceleration. During acceleration, for example, the link mechanism only stabilizes its posture and is allowed to transmit driving force from the engine unit to the body above the spring when it moves to a position where a balance between forces can be achieved. On the contrary in this embodiment, since no link mechanism is provided, a feeling of directness can be improved that much, and in addition, since the rigidity of the body frame itself is high in the region where the driving force from the engine unit is received, a higher feeling of directness can be achieved.

The engine unit 7 is supported through the elastic bushes 62, so that the vertical load exerted on the rear wheel 8 can be absorbed. In addition, the elastic bush 62 has soft spring characteristics in the direction of the cylinder axis B, so that both of the primary vibration and the secondary vibration due to the primary inertia force of the engine body 9 can be absorbed. Further, it has hard spring characteristics in the direction of B1 perpendicular to the cylinder axis B, so that the supporting rigidity of the pivot sections 13b of the engine unit 7 to the relative torsion can be enhanced, improving the driving stability.

The pivot section 13b is disposed on the cylinder block 15 side of the imaginary plane C including the crank axis P and perpendicular to the cylinder axis B when viewed in the direction of the crankshaft as well as below the lower surface 15a of the cylinder block 15, so that the pivot section 13b is located near the cylinder block 15 of high rigidity and the supporting rigidity can be enhanced further.

In this embodiment, the distance d1 between the pivot section 13b and the second cross member 54 is set shorter than the distance d2 between the pivot section 13b and the first cross member 53, so that interference due to up and down swinging movement of the engine unit 7 is avoided while the supporting rigidity of the pivot section 13b can be enhanced.

The second cross member 54 is disposed forward and below and near the pivot section 13b, so that the second cross member 54 can be disposed in close proximity to the pivot section 13b and the supporting rigidity of the engine unit 7 can be enhanced also in this respect.

In this embodiment, a high-rigidity section 56 in the shape of approximately a triangular pillar is formed by the first and second lower horizontal side sections 40b, upper oblique side sections 41a and left and right vertical frame members 49, and first, second and third cross members 53, 54, 55, and the pivot section 13b is located in the high-rigidity section 56, so that the supporting rigidity of the engine unit 7 can be enhanced.

The main stand 60 is supported by the horizontal side section 54b of the second cross member 54 forming the high-rigidity section 56, so that the supporting rigidity of the main stand 60 can be enhanced.

The forward end of the rear cushion 58 coupled to the engine unit 7 is coupled to the first cross member 53 forming the high-rigidity section 56, so that the rigidity to the load from the rear wheel 8 can be enhanced.

In this embodiment, the cylinder block 15 and cylinder head 16 are disposed approximately horizontally such that the angle made by the extension A' of the straight line A connecting the rotation centers of the continuously variable transmission mechanism 10 and the cylinder axis B is no larger than 45° and is about 10°, so that the cylinder block 15 can be brought close to the pivot section 13b, and the supporting rigidity of the engine unit 7 can be enhanced.

In this embodiment, the cylinder block 15 and cylinder head 16 are disposed offset such that the extension B' of the cylinder axis B passes through a position offset below the crank axis P, so that the cylinder block 15 can be brought closer to the pivot section 13b. This enable the rotational inertia of the engine unit around the pivot to be decreased and the response characteristics of the under-spring components such as wheels to the road surface becomes better, and as a result, a riding feeling becomes better.

Furthermore, because of the engine body being offset below of the crank axis and because of the rotational direction of the crankshaft being the same as that of the front and rear wheels, loss horsepower of the engine can be reduced.

That is, because of the foregoing offset, the axis of the connecting rod is approximately parallel to the cylinder axis at the moment when the compressive load to the connecting rod (reaction from the connecting rod) becomes highest in the expansion stroke in the combustion chamber. At this time, the reaction from the connecting rod is not applied to the piston as a component perpendicular to the cylinder axis and the sliding resistance of the piston to the cylinder can be reduced to a minimum, so that loss horsepower of the engine can be reduced.

Although this embodiment has been described in a case where an engine (internal combustion engine) is provided as a motor, the present teaching can also be applied, as a matter of course, to the case where an electric motor is provided as the motor.

Further, although in this embodiment, the first to the third cross members 53 to 55 are formed by pipes, the present teaching is not limited to the pipes, but products made by bending, drawing or the like may be used.

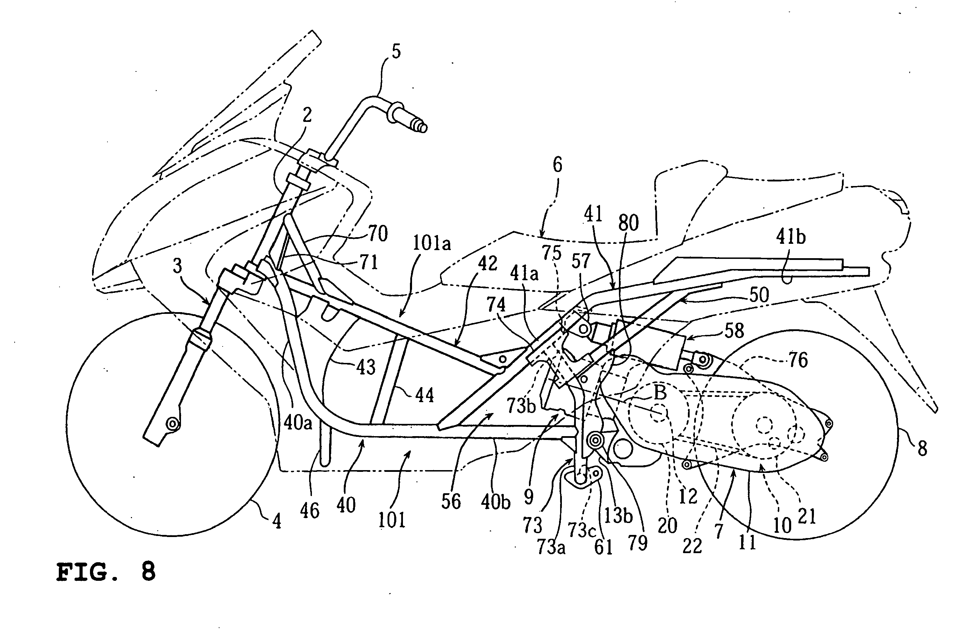

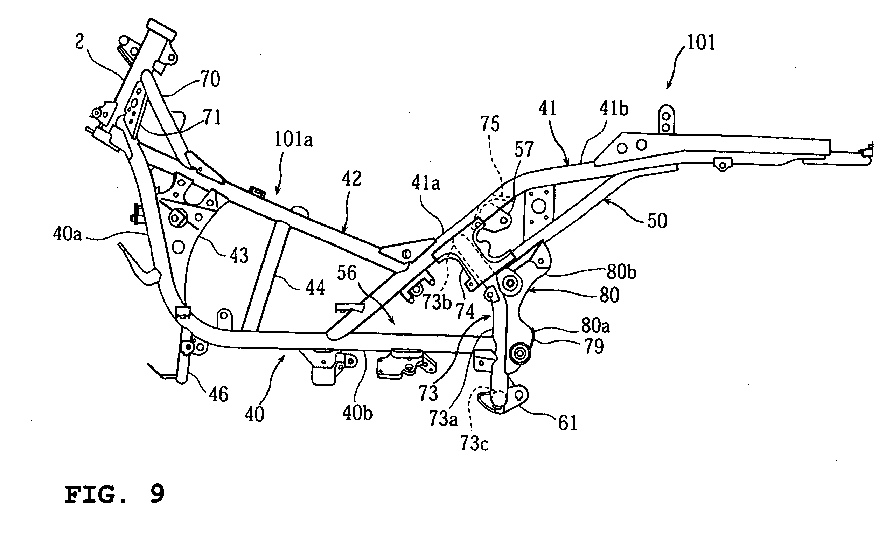

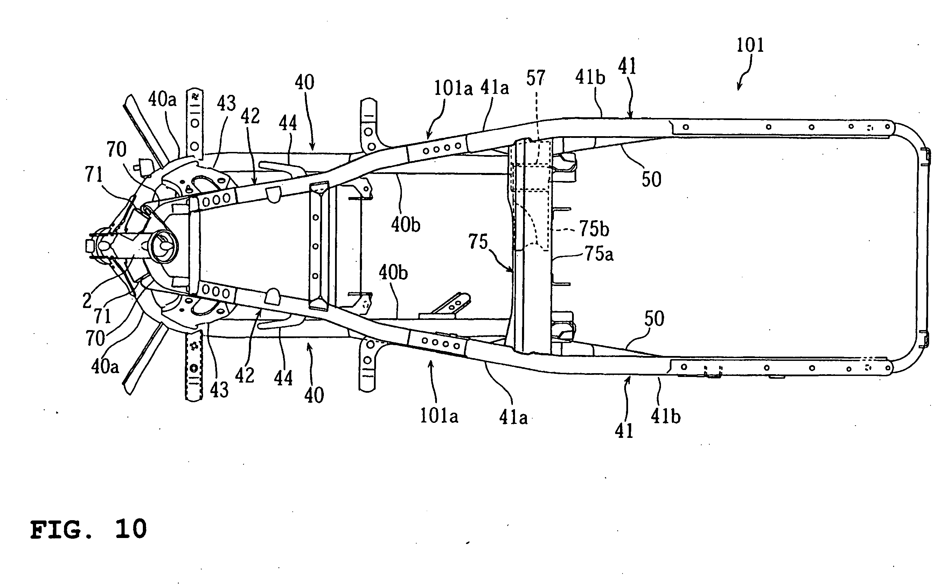

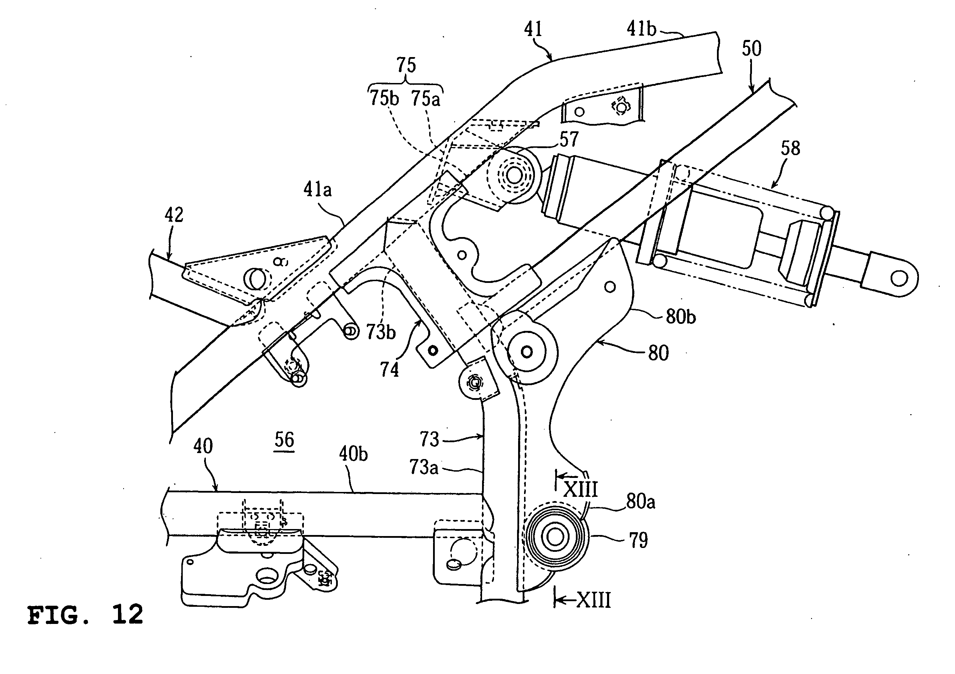

FIG. 8 through FIG. 14 are views illustrating a motorcycle according to a second embodiment. In the figures, the same reference numerals as in FIG. 1 through FIG. 4 designate the same or corresponding parts.

A body frame 101 of this embodiment has a head pipe 2 disposed at the forward end of the body, and a pair of left and right first and second frame members 101a, 101a extending rearwardly from the head pipe 2.

The first and second frame members 101a include a pair of left and right first and second down tubes 40, 40 connected to the head pipe 2, and a pair of left and right first and second seat rails 41, 41 connected to the first and second down tubes 40. The basic structure of the second embodiment is substantially the same as that of the first embodiment, and the following description is made only of different parts.

First and second upper tubes 42, 42 coupled to the head pipe 2 and the first and second seat rails 41 extend in a straight line from the head pipe 2 obliquely downward toward the rear. The forward ends of the first and second upper tubes 42 are connected to the forward ends of the first and second down tubes 40, and the rear ends of the first and second upper tubes 42 are connected to the longitudinally halfway parts of the upper oblique side sections 41a of the first and second seat rails 41.

The forward ends of the first and second upper tubes 42 and the upper end of the head pipe 2 are coupled to each other by left and right reinforcement pipes 70, 70 extending upward toward the front generally parallel to the lower oblique side sections 40a of the first and second down tubes 40. The head pipe 2, the forward ends of the first and second down tubes 40, and the reinforcement pipes 70 are coupled together with gussets 71, 71.

Coupling pipes 44, 44 coupling the first and second down tubes 40 and the first and second upper tubes 42 extend to be inclined upward toward the rear so as to be generally perpendicular to the upper tubes 42.

First and second vertical frame members 73, 73 coupling the upper oblique side sections 41a of the first and second seat rails 41 and the rear end faces of the first and second lower horizontal side sections 40b of the first and second down tubes 40 are formed as follows.

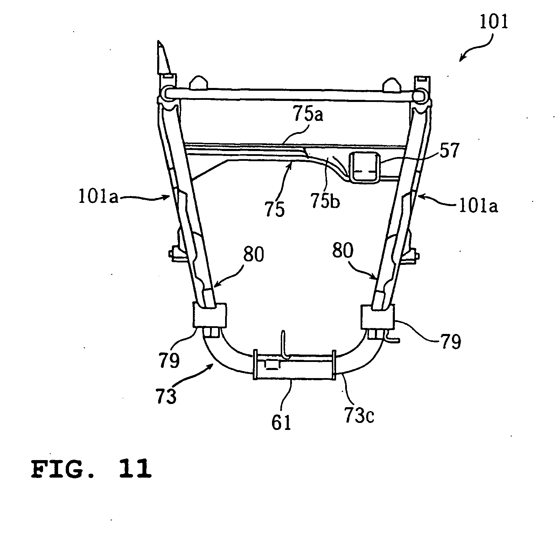

The first and second vertical frame members 73 include vertical sections 73a, 73a connected to the rear end faces of the first and second lower horizontal side sections 40b and extending in a vertical direction, forwardly bend sections 73b, 73b extending from the upper ends of the vertical sections 73a obliquely upward toward the front and connected to be generally perpendicular to the upper oblique side sections 41a of the seat rails 41, and a cross section 73c (second cross member) coupling the lower ends of the left and right vertical sections 73a in a lateral direction. As shown in FIG. 11, the first and second vertical frame members 73 are in the shape of approximately a letter U when viewed in a longitudinal direction of the vehicle.

The left and right forwardly bend sections 73b, the upper oblique side sections 41a, and the forward ends of seat stays 50 are joined together by coupling brackets 74, 74 in the shape of approximately a letter I when viewed in a transverse direction of the vehicle.

A first cross member 75 connecting the first and second seat rails 41 in the lateral direction is disposed between the first and second seat rails 41 and above and near the connecting portions of the first and second seat rails 41 with the first and second vertical frame members 73.

The first cross member 75 includes a sheet-metal cross body 75a in the shape of approximately a letter V in cross section, and a reinforcement plate 75b joined to the right half of the cross body 75a so as to form a generally closed section.

The right end of the first cross member 75 is connected to a bracket 57 in the shape of approximately a letter C that is open upward for supporting the forward end of a rear cushion 58. The rear end of the rear cushion 58 is supported by a rear arm 76 for supporting a rear wheel 8 for up and down swinging movement.

Left and right high-rigidity sections 56, 56 formed in the shape of approximately a triangle by the first and second frame members 101a are coupled to each other by the first cross member 75, at their upper end portions, and the lower rear end portions of the left and right high-rigidity sections 56, 56 are coupled to each other by the second cross section 73c.

Pivot members 79, 79 are disposed at regions of the first and second vertical frame members 73 near the connecting portion thereof with the down tubes 40. The left and right pivot members 79 have a circular cylindrical shape and are disposed, with the axes extending in the lateral direction, at positions rearward of the vertical sections 73a and generally opposing the lower horizontal side sections 40b of the down tubes 40.

The left and right pivot members 79, the vertical frame members 73, and the seat stays 50 are joined together by suspension members 80, 80 having the shape of approximately a letter V. The suspension members 80 are made of a pair of left and right sheet metal plates 81, 81 in the shape of a hollow box, and each include a pivot section 80a surrounding and supporting the periphery of the pivot member 79, and a suspension section 80b extending upward along the rear face of the vertical section 73a and then extending along the lower face of the forward end portion of the seat stay 50. The suspension section 80b has a footrest for a rear rider (not shown) attached thereto.

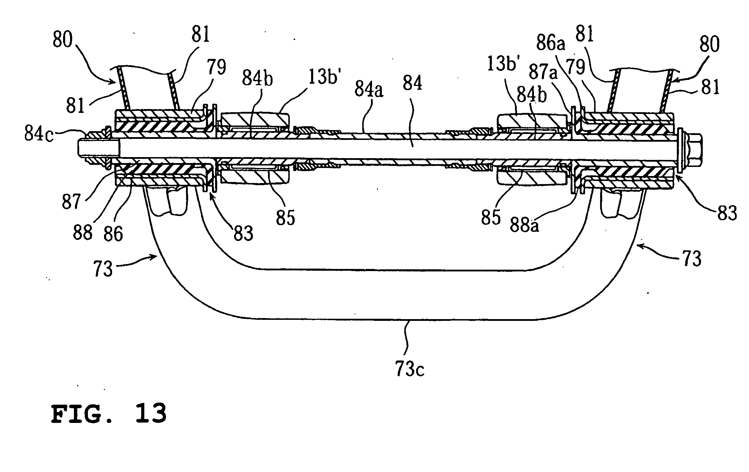

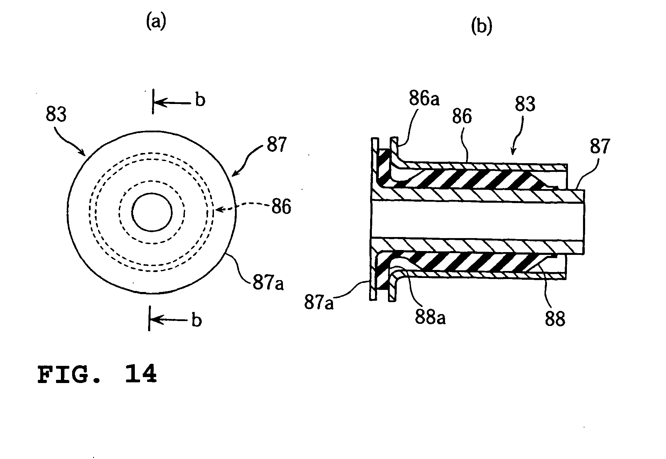

As shown in FIG. 13 and FIG. 14, the engine unit 7 is supported, at its left and right pivot sections 13b, 13b, by the left and right pivot members 79 for up and down swinging movement through a pivot shaft 84 and elastic bushes 83.

The left and right pivot sections 13b are formed to project forward from the bottom wall of a crankcase 13, and have the distal ends with circular cylindrical boss parts 13b'. The left and right boss parts 13b', 13b' are located inside of the left and right pivot members 79 in the axial direction thereof and supported by the pivot shaft 84 through bearings 85, 85 for rotation. Reference numerals 84a, 84b denote collars. Fixing a nut 84c permits positioning the elastic bushes 83 and the circular cylindrical boss parts 13b' in the axial direction.

The left and right elastic bushes 83 are each configured such that a rubber member 88 is mounted between an outer pipe 86 and an inner pipe 87 by fusion welding. The boss parts 13b', 13b' of the engine unit 7 are thus supported on the pivot shaft 84 for up and down swinging movement, and the pivot shaft 84 is elastically supported by the body frame through the elastic bushes 83.

The outer pipe 86 has an outer flange 86a projecting radially outside, at the periphery of its opening on the inside in the lateral direction. The inner pipe 87 at the periphery of the opening on the inside has an inner flange 87a opposing the outer flange 86a with a gap therebetween. Between the inner flange 87a and the outer flange 86a, a flange part 88a is disposed formed together with the rubber member 88. The elastic bush 83 thus has characteristics that it can elastically deform easily in the longitudinal direction of the vehicle, whereas it cannot elastically deform in the lateral direction.

According to the motorcycle of this embodiment, the upper oblique side sections 41a of the first and second seat rails 41 and the lower horizontal side sections 40b of the first and second down tubes 40 are connected by the left and right vertical frame members 73, and the connecting portions of the frame members 73 with the upper oblique side sections 41a and lower horizontal side sections 40b are connected to each other by the first cross member 75 and the second cross member 73c, so that the supporting rigidity of the engine unit 7 by the body frame 101 can be improved. This embodiment thus provides the same effect as the first embodiment.

In this embodiment, regions of the left and right first and second seat rails 41, 41 near the connecting portions thereof with the first and second vertical frame members 73, 73 are coupled to each other by the first cross member 75 in the lateral direction, and the first cross member 75 is coupled to the forward end of the rear cushion 58 located generally horizontally in the longitudinal direction of the vehicle. The rear cushion 58 is thus supported by the first cross member 75 coupling the left and right high-rigidity sections 56, 56, so that the supporting rigidity of the rear cushion 58 can be enhanced, and driving stability and a riding feeling can be improved.

In this embodiment, the rear ends of the left and right upper tubes 42 extending in a straight line from the head pipe 2 obliquely downward toward the rear are connected to the longitudinally halfway parts of the upper oblique side sections 41a of the left and right seat rails 41. The high-rigidity sections 56 can be thereby reinforced by the left and right upper tubes 42, enhancing the supporting rigidity of the engine unit 7 and the rear cushion 58.

In this embodiment, since the left and right vertical frame members 73 and the rear portions of the upper horizontal side sections 41b of the seat rails 41 are coupled to each other by the left and right seat stays 50, 50, the high-rigidity sections 56 can be reinforced by the left and right seat stays 50, thereby further enhancing the supporting rigidity of the engine unit 7 and the rear cushion 58.

In this embodiment, the pivot members 79, 79 are located at the regions of the left and right vertical frame members 73 near the connecting portions thereof with the down tubes 40, and the engine unit 7 is supported by the left and right pivot members 79, 79 via the pivot shaft 84. The supporting rigidity of the engine unit 7 can be thereby enhanced.

In this embodiment, since the pivot members 79, the vertical frame members 73, and the seat stays 50 are coupled together with the suspension members 80 in the shape of a hollow box, the high-rigidity sections 56 can be reinforced by, the left and right suspension members 80, thereby further enhancing the supporting rigidity of the engine unit 7.

In this embodiment, the engine unit 7 is supported on the body frame 101 through the elastic bushes 83. The engine unit 7 is thus elastically supported on the body frame 101 in the longitudinal direction of the vehicle due to the elasticity of the rubber members 88 of the elastic bushes 83, so that a riding feeling during acceleration and deceleration can be improved.

The flange part 88a formed together with the rubber member 88 is disposed between the outer flange 86a formed on the outer pipe 86 and the inner flange 87a formed on the inner pipe 87, so that the flanges 86a, 87a and 88a can limit the amount of lateral movement of the engine unit 7. The lateral swinging movement of the engine unit 7 can thus be prevented, and a riding feeling can be improved also in this respect.

The description above discloses (amongst others) an embodiment of a motorcycle including a body frame having first and second frame members disposed on one side and the other of the vehicle, respectively, and a unit swinging type motor unit mounted on the body frame for up and down swinging movement, in which the motor unit is one that a motor body and a transmission case having a power transmission mechanism housed therein are joined together integrally; a pivot section supported by the body frame is formed in a region of the motor body or the transmission case below of a motor output shaft; and the body frame is provided with first and second cross members disposed with the pivot section held therebetween when viewed from the side of the vehicle for connecting the first and second frame members, and the first and second cross members and the pivot section are arranged approximately in a straight line when viewed from the side of the vehicle.

Here, the condition of the first and second cross members and the pivot section being arranged approximately in a straight line in this embodiment, includes a case where the pivot section is located on a straight line connecting the first and second cross members and a case where the pivot section is offset a little from the foregoing straight line to such an extent that the angle made by the foregoing first and second cross members and the pivot section is no smaller than 120°.

In addition, the motor in this embodiment includes an engine (internal combustion engine).

In the motorcycle according to this embodiment, since the first and second cross members are disposed with the pivot section held therebetween, the rigidity of the body frame itself is enhanced, and further, the motor body is surrounded by the first and second cross members and the first and second frame members, so that the supporting rigidity of the motor unit by the body frame can be enhanced.

In this embodiment, since existing cross members generally adopted for the connection of the first and second frame members, are disposed with the pivot section held therebetween, improvement in the rigidity of the frame itself can be realized, as well as improvement in the supporting rigidity of the motor unit, and a problem raised in the case of a large bracket or a reinforcement member being added, such as an increase in the number of parts and body weight, can be avoided.

The description above further discloses, as a preferred first aspect, a motorcycle comprising a body frame having first and second frame members disposed on one side and the other of the vehicle, respectively, and a unit swinging type motor unit mounted on the body frame for up and down swinging movement, wherein the motor unit is one in which a motor body and a transmission case having a power transmission mechanism housed therein are joined together integrally; a pivot section supported by the body frame is formed in a region of the motor body or the transmission case below a motor output shaft, and the body frame is provided with first and second cross members disposed with the pivot section held therebetween when viewed from the side of the vehicle for connecting the first and second frame members, and the first and second cross members and the pivot section are arranged approximately in a straight line when viewed from the side of the vehicle.

Further, the motor unit is an engine unit in which an engine body and a transmission case are joined together integrally, and the motor output shaft is a crankshaft.

Further, the engine body has a cylinder disposed in a forward leaning state, and the first and second cross members are disposed above and below the cylinder, respectively.

Further, the body frame is provided with a pair of left and right, first and second vertical frame members extending, each approximately in a straight line, between a connection point of the first frame member with the first cross member and a connection point of the first frame member with the second cross member and between a connection point of the second frame member with the first cross member and a connection point of the second frame member with the second cross member, respectively, and the cylinder crosses the first and second vertical frame members when viewed from the side of the vehicle.

Further, according to a preferred aspect, the first and second frame members include a pair of left and right, first and second down tubes having first and second lower oblique side sections extending downward from a head pipe and first and second lower horizontal side sections adjoining the lower oblique side sections and extending approximately horizontally toward the rear; and first and second seat rails having first and second upper oblique side sections extending obliquely upward toward the rear from the halfway parts of the first and second lower horizontal side sections of the first and second down tubes and first and second upper horizontal side sections adjoining the first and second upper oblique side sections and extending rearward, the halfway parts of the first and second upper oblique side sections and the rear ends of the first and second lower horizontal side sections being connected by first and second vertical frame members, respectively, and the first and second cross members being disposed near connecting portions of the vertical frame members with the upper oblique side sections and the lower horizontal side sections, and the cylinder crosses the vertical frame members when viewed from the side of the vehicle.

Further, according to a preferred aspect, the pivot section is supported on the vertical frame members.

Further, according to a preferred aspect, the lower ends of the vertical frame members and the rear ends of the lower horizontal side sections are joined through suspension members and the pivot section is supported on the suspension members through elastic bushes.

Further, according to a preferred aspect, the pivot section is disposed on the cylinder side of an imaginary plane including the crank axis and perpendicular to the cylinder axis and below the bottom of the cylinder when viewed in the direction of the crankshaft.

Further, according to a preferred aspect, the distance between the pivot section and the second cross member is set shorter than that between the pivot section and the first cross member.

Further, according to a preferred aspect, the second cross member is disposed below and near the pivot section.

Further, according to a preferred aspect, the second cross member is disposed forward of and near the pivot section.

Further, according to a preferred aspect, a third cross member is connected to connecting portions of the first and second lower horizontal side sections with the upper oblique side sections, a high-rigidity section in the shape of approximately a triangular pillar is formed by the first and second lower horizontal side sections, first and second upper oblique side sections and first and second vertical frame members, and the first, second and third cross members, and the pivot section is located in the high-rigidity section.

Further, according to a preferred aspect, the second cross member is made up of vertical side sections extending downward from the first and second lower horizontal side sections and a horizontal side section for connecting both the vertical side sections to each other, and a main stand is supported on the horizontal side section.

Further, according to a preferred aspect, the other end of a rear cushion coupled at one end to the engine unit is coupled near the connecting portion of the first cross member with the vertical frame member.

Further, according to a preferred aspect, the power transmission mechanism is provided with a continuously variable transmission mechanism having a driving sheave disposed coaxially with the crankshaft, a driven sheave disposed on the rear wheel side and a V-belt stretched over both the sheaves, and the cylinder in the engine body is disposed such that the angle made by the extension of a straight line connecting rotation centers of the driven sheave and driving sheave and the cylinder axis is no larger than 45°.

Further, according to a preferred aspect, the cylinder is disposed offset such that the extension of the cylinder axis passes through a position offset downward from the crank axis.

The description above discloses, as a particularly preferred embodiment, to provide a motorcycle capable of enhancing the supporting rigidity of a body frame without need of increasing the number of parts and body weight, an engine unit 7 being one in which an engine body 9 and a transmission case 11 having a transmission 10 housed therein, which are joined together integrally, wherein a pivot section 13b supported by a body frame 1 is formed in a region of the engine body 9 below of a crankshaft 12; and the body frame 1 is provided with first and second cross members 53, 54 disposed with the pivot section 13b held therebetween for connecting the first and second frame members 1a.

## Claims

1. Two-wheeled vehicle, comprising
a body frame (1) having a pair of left and right, first and second frame members (1a, 101 a) disposed on opposite sides of the vehicle, and
a motor unit (7) mounted on the body frame (1) for up and down swinging movement, wherein
the motor unit (7) is an engine unit (7), in which an engine body (9) and a transmission case (11) having a power transmission mechanism (10) housed therein are joined together integrally, and wherein a motor output shaft (12) is a crankshaft (12), and wherein
the body frame (1) is provided with first (53, 75) and second (54, 73c) cross members disposed with a pivot section (13b) of the engine unit (7) held there between, when viewed from a side of the vehicle, for connecting the first and second frame members (1a, 101a),
the pivot section (13b) is supported by the body frame (1), **characterized in that** the pivot section (13b) is formed in a region of the engine body (9) or the transmission case (11) below the motor output shaft (12),
the engine body (9) has at least one cylinder (15, 16) disposed in a forward leaning state, and the first (53, 75) and second (54, 73c) cross members are disposed above and below the at least one cylinder (15, 16), respectively, and
the body frame (1) is provided with a pair of left and right, first and second vertical frame members (49, 73) extending, each approximately in a straight line, between a connection point of the first frame member (1a, 101a) with the first cross member (53, 75) and a connection point of the first frame member (1a, 101 a) with the second cross member (54, 73c) and between a connection point of the second frame member (1a, 101 a) with the first cross member (53, 75) and a connection point of the second frame member (1a, 101 a) with the second cross (54, 73c) member, respectively, and the at least one cylinder (15, 16) crosses the first and second vertical frame members (49, 73) when viewed from the side of the vehicle.

2. Two-wheeled vehicle according to claim 1, **characterized in that** the first (53, 75) and second (54, 73c) cross members and the pivot section (13b) are arranged approximately in a straight line when viewed from the side of the vehicle, including a case where the pivot section (13b) is located on a straight line connecting the first (53, 75) and second (54, 73c) cross members and a case where the pivot section (13b) is offset a little from the straight line to such an extent that an angle made by the first (53, 75) and second (54, 73c) cross members and the pivot section (13b) is no smaller than 120°.

3. Two-wheeled vehicle according to claim 1 or 2, **characterized in that** the first and second frame members (1a, 101a) include a pair of left and right, first and second down tubes (40) having first and second lower oblique side sections (40a) extending downward from a head pipe (2) and first and second lower horizontal side sections (40b) adjoining the lower oblique side sections (40a) and extending approximately horizontally toward the rear; and a pair of left and right, first and second seat rails (41) having first and second upper oblique side sections (41a) extending obliquely upward toward the rear from the halfway parts of the first and second lower horizontal side sections (40b) of the first and second down tubes (40) and first and second upper horizontal side sections (41b) adjoining the first and second upper oblique side sections (41a) and extending rearward, the halfway parts of the first and second upper oblique side sections (41a) and the rear ends of the first and second lower horizontal side sections (40b) being connected by the first and second vertical frame members (49, 73), respectively, and the first (53, 75) and second (54, 73c) cross members being disposed near connecting portions of the vertical frame members (49, 73) with the upper oblique side sections (41 a) and the lower horizontal side sections (40b), and the at least one cylinder (15, 16) crosses the vertical frame members (49, 73) when viewed from the side of the vehicle.

4. Two-wheeled vehicle according to any one of claims 1 to 3, **characterized in that** the pivot section (13b) is supported on the vertical frame members (49, 73).

5. Two-wheeled vehicle according to claim 3 or 4, **characterized in that** the lower ends of the vertical frame members (49, 73) and the rear ends of the lower horizontal side sections (40b) are joined through suspension members (51) and the pivot section (13b) is supported on the suspension members (51) through elastic bushes (62, 83).

6. Two-wheeled vehicle according to claim 4 or 5, **characterized in that** the pivot section (13b) is disposed on the cylinder (15, 16) side of an imaginary plane (C) including the crank axis (P) and perpendicular to the cylinder axis (B) and below the bottom of the cylinder (15, 16) when viewed in the direction of the crankshaft (12).

7. Two-wheeled vehicle according to claim 6, **characterized in that** the distance between the pivot section (13b) and the second cross member (54, 73c) is set shorter than that between the pivot section (13b) and the first cross member (53, 75).

8. Two-wheeled vehicle according to claim 6 or 7, **characterized in that** the second cross member (54, 73c) is disposed below and near the pivot section (13b).

9. Two-wheeled vehicle according to claim 7 or 8, **characterized in that** the second cross member (54, 73c) is disposed forward of and near the pivot section (13b).

10. Two-wheeled vehicle according to one of the claims 3 to 9, **characterized in that** a third cross member (55) is connected to connecting portions of the first and second lower horizontal side sections (40b) with the upper oblique side sections (41 a), a high-rigidity section (56) in the shape of approximately a triangular pillar is formed by the first and second lower horizontal side sections (40b), first and second upper oblique side sections (41 a) and first and second vertical frame members (49, 73), and the first (53, 75), second (54, 73c) and third (55) cross members, and the pivot section (13b) are located in the high-rigidity section (56).

11. Two-wheeled vehicle according to claim 10, **characterized in that** the second cross member (54, 73c) is made up of vertical side sections (54a) extending downward from the first and second lower horizontal side sections (40b) and a horizontal side section (54b) for connecting both the vertical side sections (54a) to each other, and a main stand (60) is supported on the horizontal side section (54b).

12. Two-wheeled vehicle according to claim 10 or 11, **characterized in that** the other end of a rear cushion (58) coupled at one end to the engine, unit (7) is coupled near a connecting portion of the first cross member (53, 75) with one of the vertical frame members (49, 73).

13. Two-wheeled vehicle according to one of the claims 1 to 12, **characterized in that** the power transmission mechanism (10) is provided with a continuously variable transmission mechanism (10) having a driving sheave (20) disposed coaxially with the crankshaft (12), a driven sheave (21) disposed on the rear wheel (8) side and a V-belt (22) stretched over both the sheaves (20, 21), and the at least one cylinder (15, 16) in the engine body (9) is disposed such that the angle made by the extension of a straight line connecting rotation centers (A) of the driven sheave (21) and driving sheave (20) and the cylinder axis (B) is no larger than 45°.

14. Two-wheeled vehicle according to one of the claims 1 to 13, **characterized in that** the cylinder (15, 16) is disposed offset such that the extension of the cylinder axis (B) passes through a position offset downward from the crank axis (P).

## Patentansprüche

1. Zweirädriges Fahrzeug, aufweisend:
einen Karosserierahmen (1) mit einem Paar von linken und rechten ersten und zweiten Rahmenteilen (1 a, 101 a), angeordnet auf gegenüberliegenden Seiten des Fahrzeuges, und
einer Motoreinheit (7), montiert an dem Karosserierahmen (1) für eine Schwingbewegung nach oben oder unten, wobei
die Motoreinheit (7) eine Brennkraftmaschineneinheit (7) ist, in der ein Motorkörper (9) und ein Getriebegehäuse (11), das eine darin untergebrachte Leistungsübertragungsvorrichtung (10) aufweist, integral miteinander verbunden sind und wobei eine Motorausgangswelle (12) ein Kurbelwelle (12) ist, und wobei der Karosserierahmen (1) mit ersten (53, 75) und zweiten (54, 73c) Querteilen versehen ist, angeordnet bei einem Schwenkabschnitt (13b) der Brennkraftmaschineneinheit (7), dort dazwischen gehalten, wenn von einer Seite des Fahrzeuges gesehen, um die ersten und zweiten Rahmenteile (1 a, 101 a)zu verbinden,
der Schwenkabschnitt (13b) durch den Karosserierahmen (1) gelagert ist, **dadurch gekennzeichnet, dass** der Schwenkabschnitt (13b) in einem Bereich des Motorkörpers (9), oder das Getriebegehäuse (11) unter der Motorausgangswelle (12) gebildet ist,
wobei der Motorkörper (9) zumindest einen Zylinder (15, 16) hat, angeordnet in einem nach vorn geneigten Zustand, und die ersten (53, 75) und zweiten (54, 73c) Querteile jeweils über und unter dem zumindest einem Zylinder (15, 16) angeordnet sind, und
der Karosserierahmen (1) mit einem Paar von linken und rechten ersten und zweiten vertikalen Rahmenteilen (49, 73) versehen ist, die sich jeweils ungefähr in einer geraden Linie zwischen einem Verbindungspunkt des ersten Rahmenteiles (1a, 101a) mit dem ersten Querteil (53, 75) und einem Verbindungspunkt des ersten Rahmenteiles (1a, 101 a) mit dem zweiten Querteil (54, 73) und zwischen einem Verbindungspunkt des zweiten Rahmenteiles (1a, 101 a) mit dem ersten Querteil (53, 75) und einem Verbindungspunkt des zweiten Rahmenteils (1 a, 101a) mit dem zweiten Querteil (54, 73c) erstrecken, und wobei zumindest ein Zylinder (15, 16) die ersten und zweiten vertikalen Rahmenteile (49, 73) Quert, wenn von der Seite des Fahrzeuges gesehen.

2. Zweirädriges Fahrzeug nach Anspruch 1, **dadurch gekennzeichnet, dass** die ersten und die zweiten Querteile (54, 73c) und der Schwenkabschnitt (13b) ungefähr in einer geraden Linie angeordnet sind, wenn von der Seite des Fahrzeuges gesehen, enthaltend ein Gehäuse, in dem der Schwenkabschnitt (13b) auf einer geraden Linie angeordnet ist, die die ersten (53, 75) und zweiten (54, 73c) Querteile verbindet, und ein Gehäuse, in dem der Schwenkabschnitt (13b) ein wenig von der geraden Linie in einem solchen Maße versetzt ist, dass ein Winkel, gebildet durch die ersten (53, 75) und zweiten (54, 73c) Querteile und den Schwenkabschnitt (13b), nicht kleiner als 120° ist.

3. Zweirädriges Fahrzeug nach Anspruch 1 oder 2, **dadurch gekennzeichnet, dass** die ersten und zweiten Rahmenteile (1a, 101a) ein Paar von linken und rechten ersten und zweiten Abwärtsrohren (40) enthalten, die erste und zweite untere schräge Seitenabschnitte (40a) haben, die sich nach unten von einem Kopfrohr (2) erstrecken, und erste und zweite untere horizontale Seitenabschnitte (40b) enthalten, sich annähernd zu den unteren schrägen Seitenabschnitten (40a) und sich ungefähr horizontal in Richtung nach hinten erstreckend; und ein Paar von linken und rechten ersten und zweiten Sitzschienen (41), die erste und zweite obere schräge Seitenabschnitten (41a) aufweisen, die sich schräg nach oben in Richtung nach hinten von den Halbwegsteilen der ersten und zweiten unteren horizontalen Seitenabschnitten (40b) der ersten und zweiten Abwärtsrohre (40) erstrecken, und erste und zweite obere horizontale Seitenabschnitte (41b), sich annähernd an die ersten und zweiten oberen schrägen Seitenabschnitte (41a) und sich nach hinten erstreckend, wobei die Halbteile der ersten und zweiten oberen schrägen Seitenabschnitte (41a) und die hinteren Enden der ersten und zweiten unteren horizontalen Seitenabschnitte (40b) jeweils durch erste und zweite vertikale Rahmenteile (49, 73) verbunden sind, und die ersten (53, 75) und zweiten (54, 73c) Querteile angeordnet sind nahe der Verbindungsabschnitte der vertikalen Rahmenteile (49, 73) mit den oberen schrägen Seitenabschnitten (41a) und den unteren horizontalen Seitenabschnitten (40b), und dem zumindest einen Zylinder (15, 16) die vertikalen Rahmenteile (49, 73) Quert, wenn von der Seite des Fahrzeuges gesehen.

4. Zweirädriges Fahrzeug nach einem der Ansprüche 1 bis 3, **dadurch gekennzeichnet, dass** der Schwenkabschnitt (13b) an den vertikalen Rahmenteilen (49, 73) gelagert ist.

5. Zweirädriges Fahrzeug nach Anspruch 3 oder 4, **dadurch gekennzeichnet, dass** die unteren Enden der vertikalen Rahmenteile (49, 73) und die hinteren Enden der unteren horizontalen Seitenabschnitte (40b) durch Aufhängungsteile (51) verbunden sind und der Schwenkabschnitt (13b) an den Aufhängungsteilen (51) durch elastische Lager (62, 83) gelagert ist.

6. Zweirädriges Fahrzeug nach Anspruch 4 oder 5, **dadurch gekennzeichnet, dass** der Schwenkabschnitt (13b) auf der Zylinder- (15, 16) seite einer gedachten Ebene (C), die die Kurbelachse (P) enthält, und rechtwinklig zu der Zylinderachse (B) und unter dem Boden des Zylinders (15, 16) angeordnet ist, wenn in einer Richtung der Kurbelwelle (12) gesehen.

7. Zweirädriges Fahrzeug nach Anspruch 6, **dadurch gekennzeichnet, dass** der Abstand zwischen dem Schwenkabschnitt (13b) und dem zweiten Querteil (54, 73c) kürzer als zwischen dem Schwenkabschnitt (13b) und dem ersten Querteil (53, 75) festgelegt ist.

8. Zweirädriges Fahrzeug nach Anspruch 6 oder 7, **dadurch gekennzeichnet, dass** das zweite Querteil (54, 73c) unter und nahe des Schwenkabschnittes (13b) angeordnet ist.

9. Zweirädriges Fahrzeug nach Anspruch 7 oder 8, **dadurch gekennzeichnet, dass** das zweite Querteil (54, 73c) nach vorn und nahe des Schwenkabschnittes (13b) angeordnet ist.

10. Zweirädriges Fahrzeug nach einem der Ansprüche 3 bis 9, **dadurch gekennzeichnet, dass** ein drittes Querteil (55) mit den Verbindungsabschnitten der ersten und zweiten horizontalen Seitenabschnitte (40b) mit den oberen schrägen Seitenabschnitten (41a) verbunden ist, wodurch ein hoch- steifer Abschnitt (56) in der Form von ungefähr einer dreieckigen Säule durch die ersten und zweiten unteren horizontalen Seitenabschnitte (40b), erste und zweite obere schräge Seitenabschnitte (41a) und erste und zweite vertikale Rahmenteile (49, 73) gebildet ist und die ersten (53, 76), zweiten (54, 73c) und dritten (55) Querteile und der Schwenkabschnitt (13b) in dem hoch- steifen Abschnitt (58) angeordnet sind.

11. Zweirädriges Fahrzeug nach Anspruch 10, **dadurch gekennzeichnet, dass** das zweite Querteil (54, 73c) aus vertikalen Seitenabschnitten (54a) besteht, die sich von den ersten und zweiten unteren horizontalen Abschnitten (40b) erstrecken, gemacht ist und einem horizontalen Seitenabschnitt (54b) zum Verbinden von beiden der vertikalen Seitenabschnitte (54a) miteinander, und wobei ein Hauptständer (60) an dem horizontalen Seitenabschnitt (54b) gelagert ist.

12. Zweirädriges Fahrzeug nach Anspruch 10 oder 11, **dadurch gekennzeichnet, dass** das andere Ende eines hinteren Kissens (58), gekuppelt an einem Ende der Motoreinheit (7), nahe einem Verbindungsabschnitt des ersten Querteils (53, 75) mit einem der vertikalen Rahmenteilen (49, 73) gekuppelt ist.

13. Zweirädriges Fahrzeug nach einem der Ansprüche 1 bis 12, **dadurch gekennzeichnet, dass** die Leistungsübertragungsvorrichtung (10) mit einer stufenlos veränderbaren Getriebevorrichtung (10) versehen ist, aufweisend eine Antriebsscheibe (20), koaxial mit der Kurbelwelle (12) angeordnet, eine Abtriebsscheibe (21), angeordnet auf der Hinterrad- (8) seite, und einen Keilriemen (22), gespannt über beide der Scheiben (20, 21), und wobei zumindest ein Zylinder (15, 16) in dem Motorkörper (9) derart angeordnet ist, dass der Winkel, gebildet durch die Verlängerung der geraden Linie, die die Drehmitten (A) der Abtriebsscheibe (21) und der Antriebsscheibe (20) verbindet, und die Zylinderachse (B) nicht länger als 45° ist.

14. Zweirädriges Fahrzeug nach einem der Ansprüche 1 bis 13, **dadurch gekennzeichnet, dass** der Zylinder (15, 16) derart versetzt angeordnet ist, dass die Verlängerung der Zylinderachse (B) durch eine Position, versetzt nach unten von der Kurbelachse (P), hindurchgeht.

## Revendications

1. Véhicule à deux roues, comprenant
un cadre de caisse (1) comportant une paire de premier et second organes de cadre gauche et droit (1a, 101a) disposés sur des côtés opposés du véhicule, et
un groupe moteur électrique (7) monté sur le cadre de caisse (1) pour un mouvement de balancement haut et bas, dans lequel
le groupe moteur électrique (7) est un groupe moteur thermique (7), dans lequel un corps de moteur thermique (9) et un carter de boîte de vitesses (11) comportant un mécanisme de transmission de puissance (10) logé à l'intérieur sont assemblés solidairement, et dans lequel un arbre de sortie de moteur électrique (12) est un vilebrequin (12), et dans lequel
le cadre de caisse (1) est pourvu de première (53, 75) et deuxième (54, 73c) traverses disposées avec une section de pivot (13b) du groupe moteur thermique (7) maintenue entre elles, en vue d'un côté du véhicule, pour raccorder les premier et second organes de cadre (1a, 101a),
la section de pivot (13b) est supportée par le cadre de caisse (1), **caractérisé en ce que** la section de pivot (13b) est formée dans une région du corps de moteur thermique (9) ou du carter de boîte de vitesses (11) en dessous de l'arbre de sortie de moteur électrique (12),
le corps de moteur thermique (9) comporte au moins un cylindre (15, 16) disposé dans un état d'appui vers l'avant, et les première (53, 75) et deuxième (54, 73c) traverses sont disposées au-dessus et en dessous du au moins un cylindre (15, 16), respectivement, et
le cadre de caisse (1) est pourvu d'une paire de premier et second organes de cadre verticaux gauche et droit (49, 73) s'étendant, chacun approximativement en ligne droite, entre un point de raccordement du premier organe de cadre (1a, 101a) avec la première traverse (53, 75) et un point de raccordement du premier organe de cadre (1a, 101a) avec la deuxième traverse (54, 73c) et entre un point de raccordement du second organe de cadre (1a, 101a) avec la première traverse (53, 75) et un point de raccordement du second organe de cadre (1a, 101a) avec la deuxième traverse (54, 73c), respectivement, et le au moins un cylindre (15, 16) croise les premier et second organes de cadre verticaux (49, 73), en vue de côté du véhicule.

2. Véhicule à deux roues selon la revendication 1, **caractérisé en ce que** les première (53, 75) et deuxième (54, 73c) traverses et la section de pivot (13b) sont agencées approximativement en ligne droite en vue de côté du véhicule, y compris un cas où la section de pivot (13b) est située sur une ligne droite reliant les première (53, 75) et deuxième (54, 73c) traverses et un cas où la section de pivot (13b) est un peu décalée de la ligne droite de sorte qu'un angle réalisé par les première (53, 75) et deuxième (54, 73c) traverses et la section de pivot (13b) n'est pas plus petit que 120°.

3. Véhicule à deux roues selon la revendication 1 ou 2, **caractérisé en ce que** les premier et second organes de cadre (1a, 101a) comprennent une paire de premier et second tubes obliques gauche et droit (40) comportant des première et seconde sections latérales obliques inférieures (40a) s'étendant vers le bas depuis une tubulure de refoulement (2) et des première et seconde sections latérales horizontales inférieures (40b) contiguës aux sections latérales obliques inférieures (40a) et s'étendant approximativement horizontalement vers l'arrière ; et une paire de première et seconde glissières de siège gauche et droite (41) comportant des première et seconde sections latérales obliques supérieures (41a) s'étendant de façon oblique vers le haut et vers l'arrière depuis les parties à mi-chemin des première et seconde sections latérales horizontales inférieures (40b) des premier et second tubes obliques (40) et des première et seconde sections latérales horizontales supérieures (41b) contiguës aux première et seconde sections latérales obliques supérieures (41a) et s'étendant vers l'arrière, les parties à mi-chemin des première et seconde sections latérales obliques supérieures (41a) et les extrémités arrière des première et seconde sections latérales horizontales inférieures (40b) étant raccordées par les premier et second organes de cadre verticaux (49, 73), respectivement, et les première (53, 75) et deuxième (54, 73c) traverses étant disposées près des portions de raccordement des organes de cadre verticaux (49, 73) avec les sections latérales obliques supérieures (41a) et les sections latérales horizontales inférieures (40b), et le au moins un cylindre (15, 16) croise les organes de cadre verticaux (49, 73), en vue de côté du véhicule.

4. Véhicule à deux roues selon l'une quelconque des revendications 1 à 3, **caractérisé en ce que** la section de pivot (13b) est supportée sur les organes de cadre verticaux (49, 73).

5. Véhicule à deux roues selon la revendication 3 ou 4, **caractérisé en ce que** les extrémités inférieures des organes de cadre verticaux (49, 73) et les extrémités arrière des sections latérales horizontales inférieures (40b) sont reliées par l'intermédiaire d'organes de suspension (51) et la section de pivot (13b) est supportée sur les organes de suspension (51) par l'intermédiaire de douilles élastiques (62, 83).

6. Véhicule à deux roues selon la revendication 4 ou 5, **caractérisé en ce que** la section de pivot (13b) est disposée sur le côté du cylindre (15, 16) d'un plan imaginaire (C) incluant l'axe de manivelle (P) et perpendiculaire à l'axe de cylindre (B) et en dessous du fond du cylindre (15, 16) en vue dans la direction du vilebrequin (12).

7. Véhicule à deux roues selon la revendication 6, **caractérisé en ce que** la distance entre la section de pivot (13b) et la deuxième traverse (54, 73c) est plus courte que celle entre la section de pivot (13b) et la première traverse (53, 75).

8. Véhicule à deux roues selon la revendication 6 ou 7, **caractérisé en ce que** la deuxième traverse (54, 73c) est disposée en dessous et près de la section de pivot (13b).

9. Véhicule à deux roues selon la revendication 7 ou 8, **caractérisé en ce que** la deuxième traverse (54, 73c) est disposée en avant et près de la section de pivot (13b).

10. Véhicule à deux roues selon l'une des revendications 3 à 9, **caractérisé en ce qu'**une troisième traverse (55) est raccordée aux portions de raccordement des première et seconde sections latérales horizontales inférieures (40b) avec les sections latérales obliques supérieures (41a), une section de haute rigidité (56) en forme approximativement de pilier triangulaire est formée par les première et seconde sections latérales horizontales inférieures (40b), les première et seconde sections latérales obliques supérieures (41a) et les premier et second organes de cadre verticaux (49, 73), et les première (53, 75), deuxième (54, 73c) et troisième (55) traverses, et la section de pivot (13b) sont situées dans la section de haute rigidité (56).

11. Véhicule à deux roues selon la revendication 10, **caractérisé en ce que** la deuxième traverse (54, 73c) est constituée de sections latérales verticales (54a) s'étendant vers le bas depuis les première et seconde sections latérales horizontales inférieures (40b) et d'une section latérale horizontale (54b) pour raccorder les deux sections latérales verticales (54a) l'une à l'autre, et une béquille principale (60) est supportée sur la section latérale horizontale (54b).

12. Véhicule à deux roues selon la revendication 10 ou 11, **caractérisé en ce que** l'autre extrémité d'un coussinet arrière (58) couplé à une extrémité du groupe moteur thermique (7) est couplée près d'une portion de raccordement de la première traverse (53, 75) avec l'un des organes de cadre verticaux (49, 73).

13. Véhicule à deux roues selon l'une des revendications 1 à 12, **caractérisé en ce que** le mécanisme de transmission de puissance (10) est pourvu d'un mécanisme de transmission variable en continu (10) comportant une poulie motrice (20) disposée coaxialement avec le vilebrequin (12), une poulie menée (21) disposée sur le côté de la roue arrière (8) et une courroie trapézoïdale (22) tendue sur les deux poulies (20, 21), et le au moins un cylindre (15, 16) dans le corps de moteur thermique (9) est disposé de telle sorte que l'angle réalisé par le prolongement d'une ligne droite reliant des centres de rotation (A) de la poulie menée (21) et de la poulie motrice (20) et de l'axe de cylindre (B) n'est pas plus grand que 45°.

14. Véhicule à deux roues selon l'une des revendications 1 à 13, **caractérisé en ce que** le cylindre (15, 16) est disposé de manière décalée de telle sorte que le prolongement de l'axe de cylindre (B) passe à travers une position décalée vers le bas depuis l'axe de manivelle (P).
